# EUROPÄISCHE PATENTSCHRIFT

(11) **EP 0 683 065 B1**
(45) Veröffentlichungstag und Bekanntmachung des Hinweises auf die Patenterteilung: **15.07.1998**
(21) Anmeldenummer: 95106484.9
(22) Anmeldetag: 28.04.1995
(51) Int. Cl.: B60K 17/08, F16H 37/04, B60K 17/346

(54) **Indirekt-Schaltgetriebe für geländegängige Kraftfahrzeuge**
Gearbox for off-road vehicle
Boîte de vitesses pour véhicule tout-terrains

(30) Priorität: 18.05.1994 DE 4417372
(43) Veröffentlichungstag der Anmeldung: 22.11.1995
(73) Patentinhaber: Dr.Ing.h.c. F. Porsche Aktiengesellschaft, 70435 Stuttgart (DE)
(72) Erfinder: Müller, Robert, D-71297 Mönsheim (DE)

(56) Entgegenhaltungen:
- AU-B- 545 514
- DE-A- 3 006 811
- DE-A- 3 428 451
- DE-B- 1 580 101
- PATENT ABSTRACTS OF JAPAN vol. 006 no. 242 (M-175) ,30.November 1982 & JP-A-57 140949 (TOYOTA JIDOSHA KOGYO KK;OTHERS: 01) 31.August 1982,

## Beschreibung

Die Erfindung geht aus von einem Indirekt-Schaltgetriebe für geländegängige Kraftfahrzeuge nach der Gattung des Hauptanspruches.

Ein derartiges Indirekt-Schaltgetriebe ist beispielsweise aus der DE-AS 15 80 101 bekannt. Diese zeigt ein mehrgängiges Zahnräder-Wechselgetriebe in Gruppenbauart mit einer nachgeschalteten, im Getriebeblock integrierten, schaltbaren Gelände-Reduzierstufe. Bei dieser Gelände-Reduzierstufe ist ein Losrad des Hauptgetriebes als Doppelzahnrad der Ausgangszelle ausgebildet und dient als Vorgelegewelle der Gelände-Reduzierstufe. Die Abtriebwelle des Getriebes bzw. der Reduzierstufe ist als im Gehäuse gelagerte Vollwelle ausgebildet, die endseitig mit einem Achsantrieb verbindbar ist.

Aus der DE 30 06 811 A1 ist ein Schaltgetriebe für Kraftfahrzeuge bekannt, das als Indirektgetriebe mit parallel angeordneter Eingangswelle und einer Sekundärwelle ausgebildet ist. Dabei sind die Zahnräder der Eingangswelle drehfest mit dieser verbunden, während die Zahnräder der Sekundärwelle als Los- oder Schalträder drehbar auf dieser gelagert sind und über Schaltklauen in eine drehfeste Verbindung schaltbar sind. Dem Schaltgetriebe ist eine Reduzierstufe bzw. ein Reduziergetriebe nachgeschaltet, dessen Vorgelegewelle parallel zur Sekundärwelle des Getriebes angeordnet ist. Die Schaltung der beiden Stufen des Reduziergetriebes erfolgt über eine auf der Vorgelegewelle angeordnete Schaltklaue. Durch eine derartige Anordnung des Reduziergetriebes bzw. der Reduzierstufe baut das Schaltgetriebe relativ breit. Darüber hinaus erfordert eine derartige Anordnung dreier paralleler Wellen einen erheblichen Lagerungsaufwand.

Aus der DE 34 28 451 A1 ist ein Indirekt-Schaltgetriebe bekannt, bei dem das Reduziergetriebe bzw. die Reduzierstufe als Vorschaltgruppe an der Eingangsseite des Schaltgetriebes ausgebildet ist. Dieses vorgeschaltete Reduziergetriebe hat zwei Getriebereihen, eine Getriebereihe für hohe Geschwindigkeiten und eine Getriebereihe für niedrige Geschwindigkeiten. Die Getriebereihe für hohe Geschwindigkeiten ist dabei über eine hydraulische Kupplung schaltbar, während die Getriebereihe für die niedrige Geschwindigkeit über eine Einwegkupplung schaltbar ist.

Der Erfindung liegt die Aufgabe zugrunde, ein Indirekt-Schaltgetriebe für geländegängige Kraftfahrzeuge so auszubilden, daß dieses insgesamt sehr kompakt baut und einen Allradantrieb ermöglicht, ohne daß Baulänge und Umfang des Getriebes übermäßig anwachsen.

Diese Aufgabe wird anhand der kennzeichnenden Merkmale des Hauptanspruches gelöst. Wird bei einem Indirekt-Schaltgetriebe eines der Losräder auf der Eingangswelle als Doppelrad ausgebildet, kann dieses als Vorgelegewelle für das Reduziergetriebe genutzt werden. Dadurch ist eine koaxiale Anordnung des Reduziergetriebes ermöglicht, so daß der Getriebeumfang (Querschnitt senkrecht zur Getriebe-Längsachse) gegenüber einem Schaltgetriebe ohne Reduzierstufe nicht oder nur unwesentlich zunimmt. Gleichzeitig baut ein derartiges Getriebe gegenüber einem herkömmlichen Schaltgetriebe mit nach- bzw. hintergeschalteter Reduzierstufe kürzer und nur unwesentlich länger als ein Schaltgetriebe ohne Reduzierstufe, da die zusätzliche Baulänge durch die "Doppel-Nutzung" eines Losrades des Schaltgetriebes auf ein Mindestmaß beschränkt bleibt. Das Schalten der Reduzierstufe kann dabei mit einer herkömmlichen Schaltmuffe erfolgen. Eine Synchronisierung des Schaltvorganges ist ohne weiteres möglich. Für den Allradbetrieb des Kraftfahrzeuges ist das Getriebe sehr kompakt ausgebildet, wenn die Ritzelwelle eines der Achsantriebe (insbesondere des Vorderachsantriebes) in der als Hohlwelle ausgebildeten Sekundärwelle des Getriebes geführt ist. Wird die Abtriebswelle des Reduziergetriebes bzw. der Reduzierstufe als Hohlwelle ausgebildet, durch deren Bohrung die Ritzelwelle eines Achsantriebes (insbesondere des Vorderachsantriebes) geführt wird, läßt sich ein Allradantrieb in besonders kompakter Bauform darstellen, ohne daß Baulänge und Umfang des Getriebes übermäßig anwachsen.

Für den Allradantrieb des Kraftfahrzeuges ist es günstig, wenn im Kraftfluß nach dem Reduziergetriebe ein Mittendifferential mit koaxialem Abtrieb zur Vorder- und Hinterachse vorgesehen ist, das vorteilhafterweise in das Getriebegehäuse integriert werden kann. Dieses Mittendifferential kann beispielsweise als selbstsperrendes Differential nach Torsen-Bauart, als Lamellen-Sperrdifferential oder auch als Visco-Kupplung ausgebildet sein.

In einer vorteilhaften Ausgestaltung der Erfindung ist das als Doppelzahnrad ausgebildete Losrad einem der oberen Gänge, insbesondere dem höchsten Gang des Schaltgetriebes zugeordnet. Dadurch ergeben sich für die Reduzierstufe günstige Umfangsabmessungen und die während des Betriebes auftretenden Drehzahlen und Drehmomente sind beherrschbar, ohne daß die Zahnradbreite des betreffenden Losrades über das herkömmliche Maß hinaus erhöht werden muß. Im Gegensatz zu den Zahnrädern der unteren Gänge sind die Zahnräder der oberen bzw. des höchsten Ganges für hohe Dauerlasten ausgelegt, so daß auch ein Dauerbetrieb der Reduzierstufe ohne übermäßige Zahnradverbreiterung möglich ist.

Ein derartig ausgebildetes Indirekt-Schaltgetriebe eignet sich besonders für den Einbau in Längsrichtung des Kraftfahrzeuges in Verbindung mit einem ebenfalls in Längsrichtung eingebauten Motor. Dieser Motor läßt sich vor der Vorderachse des Kraftfahrzeuges anordnen und ermöglicht so eine relativ geringe Bauhöhe des Motorraumes. Das Getriebe kann dabei günstig im Bereich der Vorderachse angeordnet werden, so daß ein Vorderradantrieb direkt im Bereich des Getriebes antreibbar ist.

Weitere Vorteile und vorteilhafte Ausgestaltungen der Erfindung ergeben sich aus den Unteransprüchen und der Beschreibung.

Ein Ausführungsbeispiel der Erfindung ist in der nachfolgenden Beschreibung und Zeichnung beispielhaft und schematisch näher erläutert.

Es zeigen:

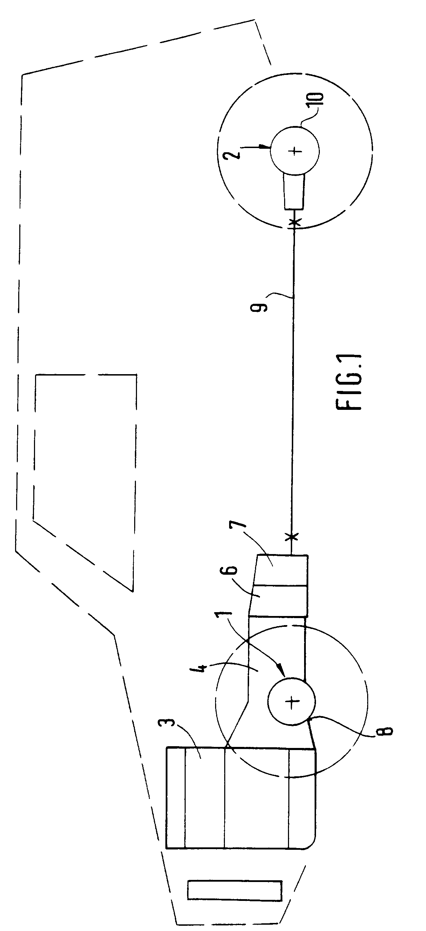

- Fig. 1: eine stark vereinfachte Prinzipskizze eines Kraftfahrzeuges mit Allradantrieb und schematischem Antriebsstrang,
- Fig. 2: ein Prinzipschaltbild des Indirekt-Schaltgetriebes mit nachgeschaltetem Verteilergetriebe.

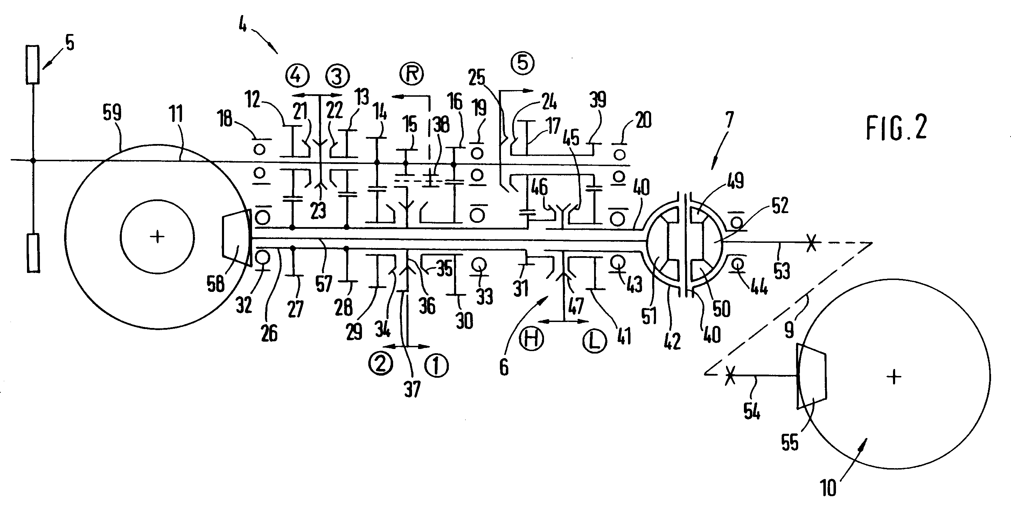

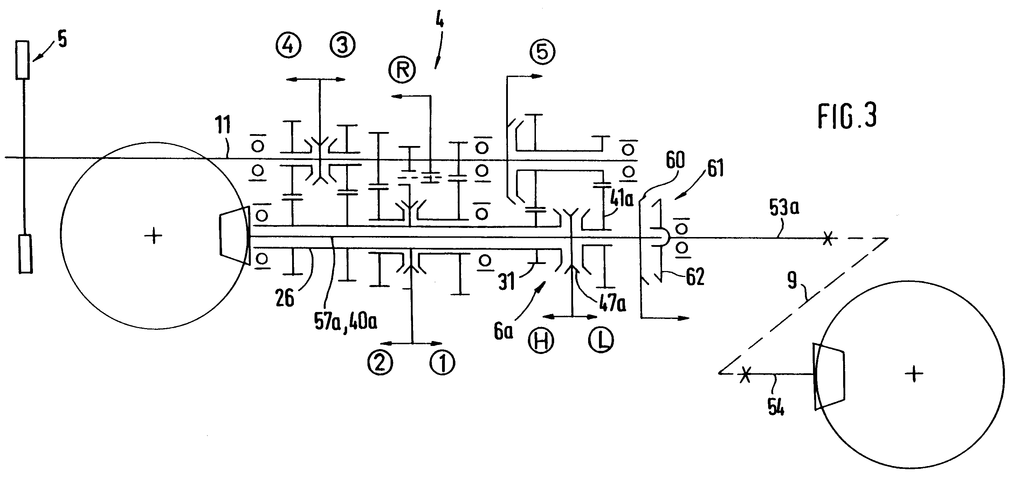

In einem Kraftfahrzeug mit antreibbarer Vorderachse 1 und ebenfalls antreibbarer Hinterachse 2 ist ein Motor 3 in Längsrichtung, d.h. mit parallel zur Fahrtrichtung angeordneten Wellen, vor der Vorderachse 1 angeordnet. An dem Motor 3 ist ein ebenfalls in Längsrichtung orientiertes Schaltgetriebe 4 unter Zwischenschaltung einer Kupplung 5 (Fig. 2 und 3) angeflanscht. An dieses Schaltgetriebe 4 schließt sich ein Reduziergetriebe 6 an, dem ein Verteilergetriebe 7 nachgeschaltet ist. Über dieses Verteilergetriebe 7 wird einerseits das im Bereich des Getriebes 4 angeordnete Vorderachsdifferential 8 und über eine Kardanwelle 9 das an der Hinterachse 2 angeordnete Hinterachsdifferential 10 angetrieben.

Die Eingangswelle 11 des Getriebes 4 ist über die Kupplung 5 trennbar mit dem Motor 3 verbunden. Auf der Eingangswelle 11 sind hintereinander angeordnet: Das Losrad 12 bzw. Schaltrad des 4. Ganges, das Losrad 13 des 3. Ganges, das Festrad 14 des 2. Ganges, das Festrad 15 des Rückwärtsganges, das Festrad 16 des 1. Ganges und das Losrad 17 des 5. Ganges. Die Lagerung der Eingangswelle 11 erfolgt in diesem Ausführungsbeispiel an drei Lagerstellen, einer ersten Lagerstelle 18 vor dem Losrad 12 des 4. Ganges, einer zweiten Lagerstelle 19 zwischen dem Festrad 16 des 1. Ganges und dem Losrad 17 des 5. Ganges und einer dritten Lagerstelle 20 am Ende der Eingangswelle 11 hinter dem Losrad 17. Die einander zugewandten Seiten der Losräder 12, 13 des 4. bzw. 3. Ganges sind jeweils mit einem Schaltkonus 21 bzw. 22 versehen, zwischen denen eine drehfest, aber axial verschieblich mit der Eingangswelle 11 verbundene Synchron-Schaltmuffe 23 angeordnet ist. Durch axiales Verschieben der Schaltmuffe 23 kann auf an sich bekannte Art und Weise eines der beiden Losräder 12, 13 in eine drehfeste Verbindung mit der Eingangswelle 11 gebracht werden. Das Losrad 17 des 5. Ganges ist auf seiner der zweiten Lagerstelle 19 zugewandten Seite mit einem Schaltkonus 24 versehen, der mit einer drehfest mit der Eingangswelle verbundenen Synchron-Schaltmuffe 25 zusammenwirkt.

Diese Schaltmuffe 25 ist axial verschieblich auf der Eingangswelle 11 gelagert, so daß durch axiales Verschieben auf an sich bekannte Art und Weise das Losrad 17 des 5. Ganges schaltbar ist.

Parallel zur Eingangswelle 11 ist im Getriebe 4 eine angetriebene Sekundärwelle 26 gelagert. Auf der Sekundärwelle 26 sind hintereinander angeordnet: Das Festrad 27 des 4.Ganges, das Festrad 28 des 3. Ganges, das Losrad 29 des 2. Ganges, das Losrad 30 des 1. Ganges und das Festrad 31 des 5. Ganges. Die Festräder 27 und 28 des 4. und 3. Ganges, die Losräder 29, 30 des 2. und 1. Ganges sowie das Festrad 31 des 5. Ganges stehen in ständig kämmenden Eingriff mit den entsprechenden Gegenzahnrädern auf der Eingangswelle 11. Die Lagerung der Sekundärwelle 26 erfolgt an zwei Lagerstellen, einer ersten Lagerstelle 32 vor dem Festrad 27 des 4. Ganges und einer zweiten Lagerstelle 33 hinter dem Losrad 30 des 1. Ganges. An den einander zugewandten Stirnseiten der Losräder 29 bzw. 30 des 2. und 1. Ganges ist jeweils ein Schaltkonus 34 bzw. 35 ausgebildet. Diese wirken auf an sich bekannte Weise mit einer drehfest, aber axial verschieblich mit der Sekundärwelle verbundenen Synchron-Schaltmuffe 36 zusammen. Diese Schaltmuffe 36 ist mit einer Außenverzahnung 37 versehen und so angeordnet, daß diese dem Festrad 15 des Rückwärtsganges gegenüberliegt. Die Außenverzahnung 37 und die Verzahnung des Rückwärtsgang-Festrades 15 sind mit Abstand zueinander angeordnet und können mit einem axial verschieblichen Umkehrzahnrad 38 in kämmenden Eingriff gebracht werden.

Das drehbar auf der Eingangswelle 11 gelagerte Losrad 17 des 5. Ganges ist als Doppelzahnrad ausgebildet und hat ein zweites, der dritten Lagerstelle 20 zugewandtes Reduzierzahnrad 39. Dieses Reduzierzahnrad 39 steht in ständig kämmendem Eingriff mit einem als Losrad drehbar auf der Abtriebswelle 40 des Reduziergetriebes 6 gelagerten Gegenzahnrades 41. Die Abtriebswelle 40 des Reduziergetriebes 6 ist fluchtend zur Sekundärwelle 26 angeordnet und mit dem Gehäuse 42 des als Mittendifferential ausgebildeten Verteilergetriebes 7 verbunden. Die Lagerung der Abtriebswelle 40 erfolgt an zwei Lagerstellen 43, 44 beiderseits des Ausgleichgetriebes 7. Das Gegenzahnrad 41 ist auf seiner der Sekundärwelle 26 zugewandten Stirnseite mit einem Schaltkonus 45 versehen. Diesem liegt ein Schaltkonus 46 gegenüber, der mit dem Festrad 31 des 5. Ganges der Sekundärwelle 20 verbunden ist. Dazwischen ist eine drehfest, aber axial verschieblich mit der Abtriebswelle 40 verbundene Synchron-Schaltmuffe 47 angeordnet, diese läßt sich durch axiales Verschieben entweder mit dem Schaltkonus 46 des 5.Ganges oder mit dem Schaltkonus 45 des Gegenzahnrades 41 verschalten.

Das Verteilergetriebe 7 ist als an sich bekanntes Mittendifferential ausgebildet, in dessen Gehäuse 42 ein Achsbolzen 48 mit zwei Kegelrädern 49, 50 geführt ist. Diese stehen mit zwei Ausgleichskegelrädern 51, 52 im Eingriff, die mit dem Vorderachsdifferential 8 bzw. dem Hinterachsdifferential 10 verbunden sind. Das Ausgleichskegelrad 52 ist dazu mit einer Anschlußwelle 53 verbunden, die über die Kardanwelle 9 mit einer Ritzelwelle 54 des Hinterachsdifferentials 10 verbunden ist. Am freien Ende dieser Ritzelwelle 54 ist ein Kegelrad 55 angeordnet, das mit dem Tellerrad 56 des nicht näher dargestellten Hinterachsdifferentials 10 kämmt. Das zweite Ausgleichskegelrad 51 ist mit der gegenüberliegenden Ritzelwelle 57 des Vorderachsdifferentials 8 verbunden. Am freien Ende der Ritzelwelle 53 ist ein Kegelrad 58 angeordnet, das mit dem Tellerrad 59 des nicht näher dargestellten Vorderachsdifferentials 8 kämmt. Die Ritzelwelle 57 ist in der Sekundärwelle 26 und der fluchtend dazu angeordneten Abtriebswelle 40 geführt bzw. gelagert, die dazu jeweils als Hohlwelle ausgeführt sind.

Durch die Ausbildung des Losrades 17 des 5. Ganges als Doppelzahnrad, das einerseits mit dem Festrad 31 des 5. Ganges und andererseits mit dem Gegenzahnrad 41 kämmt, dient das Losrad 17 als Vorgelegewelle des Reduziergetriebes 6 und ist raumsparend auf der Eingangswelle 11 gelagert. Die Schaltung des Reduziergetriebes erfolgt durch die Schaltmuffe 47. Durch Verschieben der Schaltmuffe 47 nach links (Fig. 2) in Schaltstellung H (High bzw. Schnellgang) werden die Sekundärwelle 26 und die Abtriebswelle 40 des Reduziergetriebes 6 direkt über den Schaltkonus 45 des Festrades 31 miteinander verbunden. Die Schaltung des Getriebes 4 erfolgt analog zur Schaltung herkömmlicher Schaltgetriebe ohne Reduzierstufe und braucht hier nicht näher erläutert werden. Durch Verschieben der Schaltmuffe 47 nach rechts in Schaltstufe L (Low bzw. Langsam-/Geländegang) wird diese mit dem Schaltkonus 45 des Gegenzahnrades 41 drehfest verbunden. Der Kraftfluß im Reduziergetriebe 6 erfolgt dabei in den Gängen 1 bis 4 bzw. im Rückwärtsgang des Getriebes 4 über die Sekundärwelle 26 und das Festrad 31 des 5. Ganges zu dem als Vorgelegewelle dienenden Losrad 17 auf der Eingangswelle 11. Durch die Ausbildung als Doppelzahnrad geht der Kraftfluß über das Reduzierzahnrad 39 und das damit kämmende Gegenzahnrad 41, dessen Schaltkonus 45 und die Schaltmuffe 46 zur Abtriebswelle 40. Im 5. Gang des Getriebes 4, d.h. bei geschalteter Schaltmuffe 25 geht der Kraftfluß von der Eingangswelle 11 über das Doppelzahnrad 17 bzw. 39 auf das Gegenzahnrad 41 und über den Schaltkonus 45 bzw. die Schaltmuffe 46 auf die Abtriebswelle 40 über.

## Patentansprüche

1. Indirekt-Schaltgetriebe für geländegängige Kraftfahrzeuge mit einem Hauptgetriebe mit einer Eingangswelle (11) und einer von dieser angetriebenen Sekundärwelle (26), deren Zahnräder teilweise drehfest und teilweise drehbar als Losräder auf der jeweiligen Welle gelagert sind und mit einer nachgeschalteten, im Getriebeblock integrierten, schaltbaren Gelände-Reduzierstufe (6), wobei ein Losrad (17) des Hauptgetriebes als Doppelzahnrad der Eingangswelle (11) ausgebildet und als Vorgelegewelle der Gelände-Reduzierstufe (6) betreibbar ist, **dadurch gekennzeichnet**, daß die Abtriebswelle (40) der Gelände-Reduzierstufe (6) als Hohlwelle ausgebildet ist, durch deren Bohrung die Ritzelwelle (57) eines Achsantriebs (8) geführt ist.

2. Indirekt-Schaltgetriebe nach Anspruch 1, **dadurch gekennzeichnet**, daß das als Doppelzahnrad ausgebildete Losrad (17) einem der oberen Gänge, insbesondere dem höchsten Gang des Schaltgetriebes zugeordnet ist.

3. Indirekt-Schaltgetriebe nach einem der Ansprüche 1 oder 2, **dadurch gekennzeichnet**, daß im Kraftfluß nach der Gelände-Reduzierstufe (6) ein Mittendifferential (7) mit koaxialem Abtrieb zur Vorder- und Hinterachse (1, 2) angeordnet ist.

4. Indirekt-Schaltgetriebe nach einem der Ansprüche 1 bis 3, **dadurch gekennzeichnet**, daß das Schaltelement der Gelände-Reduzierstufe (6, 6a) als Synchron-Schaltmuffe (47, 47a) ausgebildet und auf der Abtriebswelle der Reduzierstufe drehfest verschiebbar ist.

## Claims

1. An indirect manual gearbox for off-road vehicles with a main gearbox with an input shaft (11) and a secondary shaft (26) which is driven thereby and the gearwheels of which are mounted in part rotationally fixed and in part rotatable as idle gears on the respective shaft, and with a shiftable off-road reduction stage (6) mounted at the rear and integrated in the gearbox unit, an idle gear (17) of the main gearbox being constructed in the form of a double gearwheel of the input shaft (11) and being drivable as a layshaft of the off-road reduction stage (6), **characterized in that** the driven shaft (40) of the off-road reduction stage (6) is constructed in the form of a hollow shaft, through the bore of which the pinion shaft (57) of an axle drive (8) passes.

2. An indirect manual gearbox according to Claim 1, **characterized in that** the idle gear (17) constructed in the form of a double gearwheel is associated with one of the higher gears, in particular the highest gear of the gearbox.

3. An indirect manual gearbox according to one of Claims 1 or 2, **characterized in that** a central differential (7) with a coaxial power take-off to the front and rear axles (1, 2) is arranged in the power flow downstream of the off-road reduction stage (6).

4. An indirect manual gearbox according to one of Claims 1 to 3, **characterized in that** the shifting member of the off-road reduction stage (6, 6a) is constructed as a synchronizing gear-shift sleeve (47, 47a) and is slidable in a rotationally fixed manner on the take-off shaft of the reduction stage.

## Revendications

1. Boîte de vitesses indirecte pour véhicules tout terrain comportant une transmission principale avec un arbre d'entrée (11) et un arbre secondaire (26), entraîné par celui-ci, dont les pignons sont montés en partie solidairement en rotation et en partie tournants, en tant que pignons libres, sur l'arbre respectif et avec un étage réducteur tout terrain (6) commutable, monté en aval, intégré dans le bloc de la transmission, un pignon libre (17) de la transmission principale étant conformé en double pignon de l'arbre d'entrée (11) et pouvant être commandée en tant qu'arbre de transmission de l'étage réducteur tout terrain (6), caractérisée en ce que l'arbre de sortie (40) de l'étage réducteur tout terrain (6) est conformé en arbre creux, à travers l'alésage duquel est guidé l'arbre de pignon (57) d'un entraînement d'essieu (8).

2. Boîte de vitesses indirecte selon la revendication 1, caractérisée en ce que le pignon libre (17) conformé en double pignon, est associé à l'un des rapports supérieurs, en particulier le rapport le plus élevé de la boîte de vitesses.

3. Boîte de vitesses indirecte selon l'une des revendications 1 ou 2, caractérisée en ce qu'un différentiel central (7) avec sortie coaxiale vers l'essieu avant et l'essieu arrière (1, 2), est placé dans le flux des forces vers l'étage réducteur tout terrain (6).

4. Boîte de vitesses indirecte selon l'une des revendications 1 à 3, caractérisée en ce que l'élément de commutation de l'étage réducteur tout terrain (6, 6a) est conformé en manchon de commutation synchrone (47, 47a) et peut coulisser solidairement en rotation sur l'arbre de sortie de l'étage réducteur.
